(19) **Europäisches Patentamt / European Patent Office / Office européen des brevets**

(11) **EP 2 278 355 A1**

(12) # EUROPEAN PATENT APPLICATION

(43) Date of publication:
26.01.2011 Bulletin 2011/04

(51) Int Cl.:
$G01S\ 13/89$ (2006.01)

(21) Application number: 09251686.3

(22) Date of filing: 30.06.2009

(84) Designated Contracting States:
AT BE BG CH CY CZ DE DK EE ES FI FR GB GR HR HU IE IS IT LI LT LU LV MC MK MT NL NO PL PT RO SE SI SK TR
Designated Extension States:
AL BA RS

(71) Applicants:
- **Mitsubishi Electric R & D Centre Europe B.V.**
  **The Surrey Research Park**
  **Guildford**
  **Surrey GU2 7YD (GB)**
  Designated Contracting States:
  **GB**
- **Mitsubishi Electric Corporation**
  **Tokyo 100-8310 (JP)**
  Designated Contracting States:
  AT BE BG CH CY CZ DE DK EE ES FI FR GR HR HU IE IS IT LI LT LU LV MC MK MT NL NO PL PT RO SE SI SK TR

(72) Inventors:
- **Machowski, Wojciech**
  **Guildford, Surrey GU1P 2PG (GB)**
- **Potter, Simon**
  **Guildford, Surrey GU2 7YD (GB)**

(74) Representative: **Brinck, David John Borchardt et al**
**R.G.C. Jenkins & Co**
**26 Caxton Street**
**London SW1H 0RJ (GB)**

(54) **Radar system**

(57)　There is discussed a radar system and method of imaging the location of an object of interest in a displayed co-ordinate system. The method involves moving a platform at a known velocity along a known path, the platform conveying a radar irradiating a field of view with an interrogation signal and detecting a signal comprising a reflection of the interrogation signal, wherein said field of view moves with the movement of the platform. For a plurality of positions of the platform, the detected signal is processed to determine range information and azimuth information for an object of interest, said azimuth information being determined from a Doppler information from said reflection of the interrogation signal off the object of interest, and a plurality of candidate location co-ordinates in the displayed co-ordinate system are determined from the range information and the azimuth information. The candidate location co-ordinates are combined to generate display data for displaying the location of the object of interest.

FIG. 7

EP 2 278 355 A1

## Description

### Field of the Invention

This invention relates to a method and apparatus for improving on both the azimuth resolution and the range resolution of a Real Aperture Radar (RAR) employed on a moving platform, typically to image a surveillance region of interest. For a RAR, the ability to reduce the azimuth beamwidth, and therefore improve the azimuth resolution, is limited by the physical dimension of the antenna. The improvement in the azimuth resolution provided by the invention results in improved Cross-Range Resolution (CRR) of a resulting radar image, while the improvement in the range resolution results in improved Down-Range Resolution (DRR) of a corresponding radar image.

### Background of the Invention

There are many circumstances in which there is a need to image non-cooperative objects of interest in some specified surveillance area. Such tasks are generally carried out using a radar sensor due to its long range and all weather capability. The radar is mounted on a moving platform to achieve the required coverage and each region of interest is illuminated by a signal to obtain object-backscattered returns. Example applications include disaster monitoring, iceberg mapping and the imaging of large scale man-made structures.

The quality of the ground maps produced by the imaging radar is determined primarily by the ability of the radar to resolve closely spaced objects on the ground. For a RAR, for example a Sideways Looking Airborne Radar (SLAR), the CRR is determined by the azimuth width of the radar beam. Two objects on the ground can only be distinguished in the cross-range dimension if the they are separated by more than CRR of the SLAR.

The CRR of a SLAR is given by:

$$CRR = \frac{Ro\lambda}{D} \qquad\qquad (1)$$

where: $R_o$ is the range from the SLAR to the object at the Closest Point of Approach (CPA), $\lambda$ is the wavelength, and D is the length of the antenna in the along track dimension.

For $R_o$ = 1 km, $\lambda$ = 30 cm, D = 0.5 m, the CRR = 60 m which is poor resolution.

It can be seen from (1) that in order to significantly improve the CRR (i.e. significantly decrease CRR) of a RAR, either the range is significantly reduced or the wavelength is significantly reduced (i.e. the operating frequency is significantly increased) or the length of the antenna is significantly increased.

Significantly reducing the range is undesirable because it would lead to a corresponding reduction in the platform altitude.

As for significantly reducing the wavelength, RARs already operate at high frequencies (microwave or millimetre-wave) to maximise the CRR. A further significant increase in the operating frequency has the disadvantage of increasing the attenuation of the Radio Frequency signals, for example due to rain.

Finally, significantly increasing the antenna length is not practicable because platforms have limited size and weight capacity.

Hence it is not possible to make significant physical changes to the range, operating frequency or antenna width to significantly improve the CRR of a RAR. The required improvement in the CRR of a RAR can only be achieved using appropriate signal processing.

Synthetic Aperture Radar (SAR) was developed to improve the CRR of a RAR. SAR produces a very long antenna synthetically or artificially by using the forward motion of the platform to carry a relatively short antenna to successive positions along the flight path. Data are accumulated for as long as a given point on the ground is illuminated by the antenna beam. At the end of this interval, the RAR integration time, the data is processed coherently to synthesise a longer antenna. As a result, the SAR has a very good CRR equal to a half of the CRR for a RAR having an aperture dimension equal to the dimension of the synthesised aperture. The resolution improvement provided by SAR processing improves the RAR CRR by up to approximately two orders of magnitude. However, in order to achieve this gain significantly more signal processing is required.

The original form of SAR, Doppler Beam Sharpening, used the platform velocity and measured Doppler frequency shift to locate signal returns in azimuth and thereby improve the CRR. This technique provides an improvement of approximately an order of magnitude better than the performance of a RAR and has relatively low computational requirements.

Another method for improving the CRR for a RAR is described in US Patent No. 4,978,960. The patent describes a method and apparatus of using a scanning monopulse radar over a ground area to be mapped.

## Description of the Invention

The present invention relates to a novel method which can improve the CRR of RAR mapping by approximately an order of magnitude. The invention can be implemented in real-time with a suitable low-complexity and low-cost FPGA. Although the method cannot achieve the same CRR as that provided by SAR, it has the benefit that the signal processing is simpler to implement and has a significantly lower processing load than SAR. This may be beneficial where processing resources such as space and weight are limited.

Aspects of the invention are set out in the accompanying claims.

The invention improves the CRR of a RAR by first reducing the RAR integration time by a factor equal to the expected Resolution Improvement RI of the invention (approximately an order of magnitude). As a result, received signals from stationary objects on the ground will be frequency modulated due to the motion of the platform with a reduced bandwidth that will be approximately the same, irrespective of the object positions. However, the centre frequencies and starting phases of the Doppler modulations of the received signals will vary and be unknown due to the unknown positions of the objects. The signal Detection (SD) algorithm disclosed in patent U.S. 6,753,803 is used to detect these frequency modulated signals and to estimate the signal power reflected form the object. All signal power estimates of the same object are then combined taking into account respective aspect angle uncertainty to locate the object. This process is repeated for all illuminated objects and results in a radar image of the ground.

## Brief Description of the Drawings

Various exemplary embodiments of the invention will now be described with reference to the accompanying drawings in which:

Fig. 1 shows the radar imaging geometry for a SLAR.

Fig. 2 shows an example of the Doppler frequency history of a received signal from a stationary point object as a function of illumination time.

Fig. 3 shows how the Doppler history for a stationary point object is sampled using shorter integration times. In the case shown, this corresponds to sampling the signal from the same object at different times. A similar case applies to detecting different object signals at the same time, although their Doppler time histories are shifted in accordance with the respective object illumination times.

Fig. 4 shows the frequency response of the SD system where it can be seen that the processing has provided a consistent and substantially flat response across all frequencies of interest. The vertical lines show the bandwidth of signals described to Fig. 3.

Fig. 5 shows the mapping of a power estimates in a sectors onto the ground producing various arcs as the platform flies past and object.

Fig. 6 shows the sampling of arcs centred on an object where in this case 21 points are used to represent the unknown azimuth position of the object in each sector / arc. The power estimates are constant within a given sector.

Fig. 7 is a top-level block diagram of a RAR which shows the location of the invention, DOPSEC, with respect to signal reception and radar display.

Fig. 8 is a block diagram of DOPSEC processing constructed in accordance with the invention.

Fig. 9 is a flow diagram illustrating the processing steps performed in a first preferred embodiment of the invention.

Fig. 10 is a flow diagram illustrating the processing steps performed in a second preferred embodiment of the invention.

Fig. 11 is a flow diagram illustrating the processing steps performed in a third preferred embodiment of the invention.

Fig.12 illustrates the improvement in CRR of an object using DOPSEC processing compared with using the SLAR.

With SLAR, (a), and one look, the object can only be localised using the entire beamwidth. The image quality is improved by averaging across looks, although the image is still smeared. With DOPSEC processing, (b), each look better localises the object, and the resultant image is a better match to the truth.

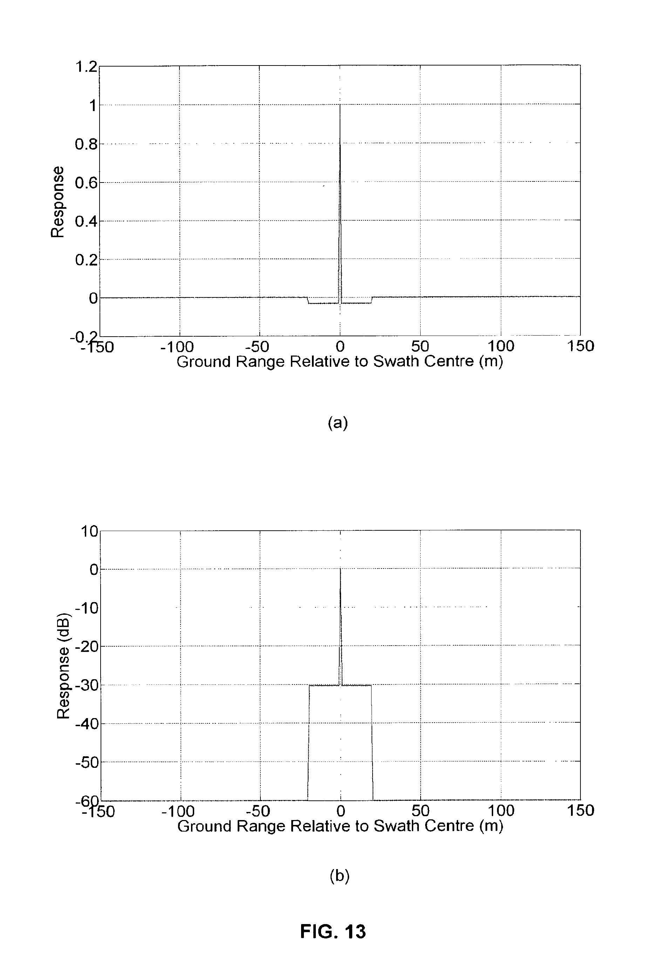

Fig. 13 shows the range response of Crosslation-based processing applied to a spread-period PRBS signal received from a single point object.

The response consists of a single peak and sidelobes which are flat and low (<-30dB) (a.) linear scale (b.) logarithmic scale.

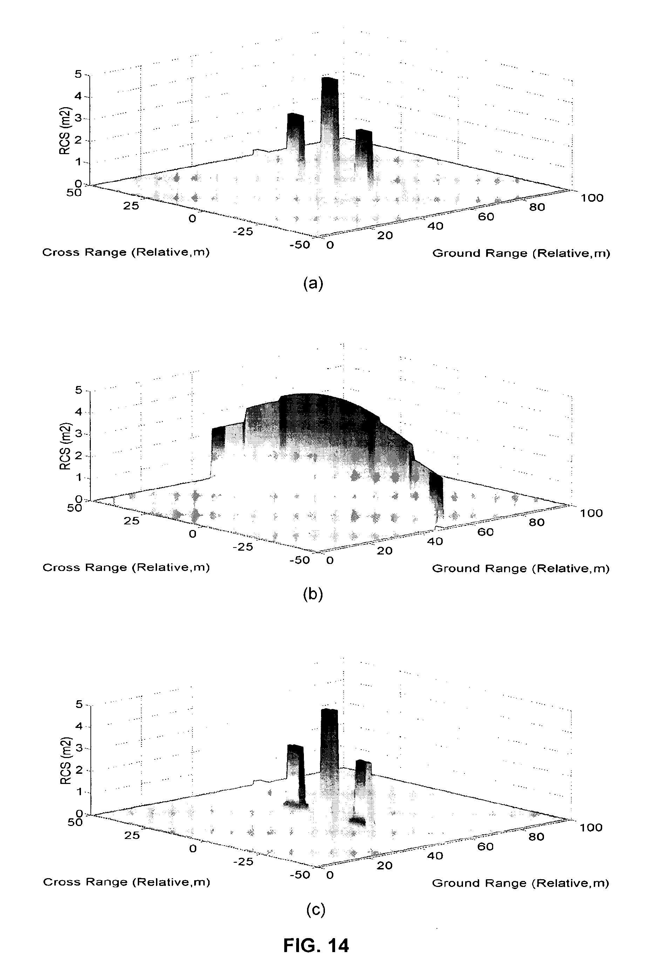

Fig. 14 shows (a) the truth data of five objects of varying RCS, (b) the SLAR image of the truth data and (c) the image of the truth data according to the invention. It can be seen that in the SLAR image, the five objects are smeared making it impossible to resolve them. In the image generated by the invention however, all objects are easily resolved.

**Detailed Description of the Invention**

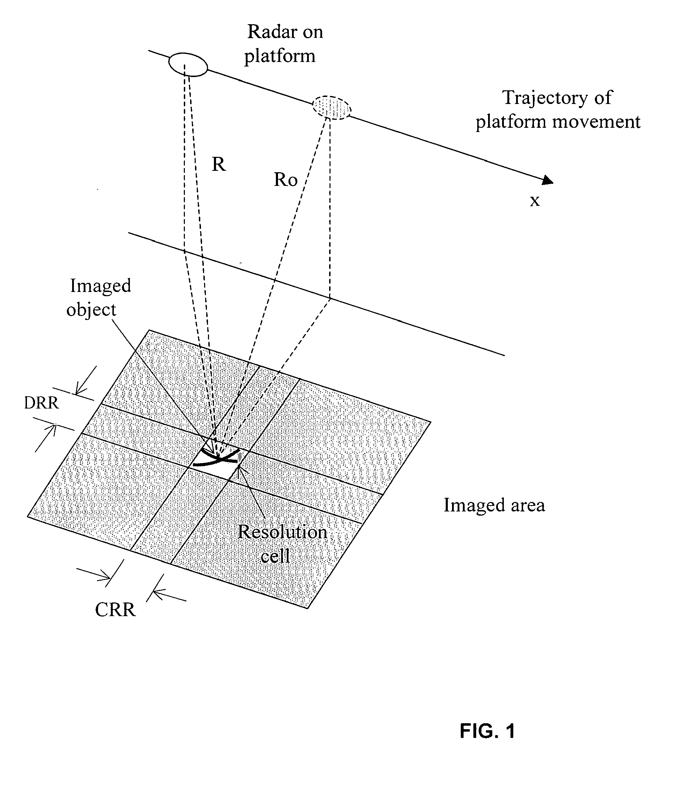

Fig. 1 shows the geometry of an exemplary imaging scenario in which a RAR is mounted on a platform that moves at a velocity V along a straight line trajectory a distance H above a plane to be imaged. The RAR outputs an interrogating waveform which irradiates a field of view on the image plane. In an embodiment, the RAR is a SLAR, the platform is an aircraft, and the image plane is the ground.

In this embodiment, the interrogating waveform is formed by a stream of pulses modulating a carrier frequency. The RAR monitors for reflections of the interrogating waveform off objects of interest on the ground plane. These reflections will generally be subject to a Doppler frequency shift on account of the relative movement between the platform and the objects of interest. The Doppler frequency shift $F_D$ for a reflection off an object of interest, as a function of the distance x between the platform position and CPA, is given by:

$$F_D = -\frac{2Vx}{\lambda Ro} \qquad (2)$$

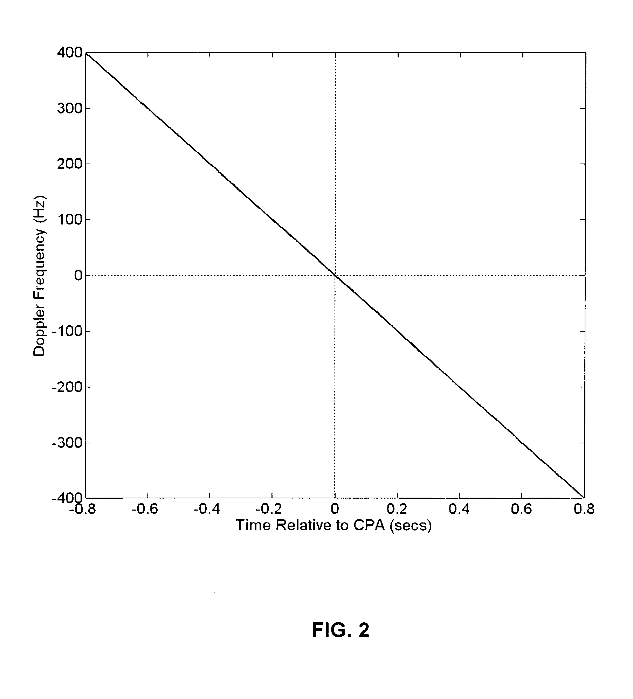

where $Ro$ is the distance between the platform and the object of interest at the CPA. This relationship represents a linear variation of Doppler frequency $F_D$ as a function of the distance $x$ travelled along the flight direction by the RAR on the platform (Fig. 2). Hence the signal from a stationary point object will exhibit this Doppler frequency history.

Dividing the RAR integration time (i.e. the length of time a given point in the image plane is irradiated by the interrogating waveform) into smaller and equal time intervals produces beam sectors with approximately equal angular extent in the azimuth dimension and, as a result, narrower and very nearly equal bandwidths of Doppler frequency modulations in the received signals. A typical value of an RAR integration time would be 1.6 seconds. In addition, the received signal from an object may have a duration significantly shorter than the RAR integration time, in which case the use of shorter integration times can improve the signal-to-noise ratio.

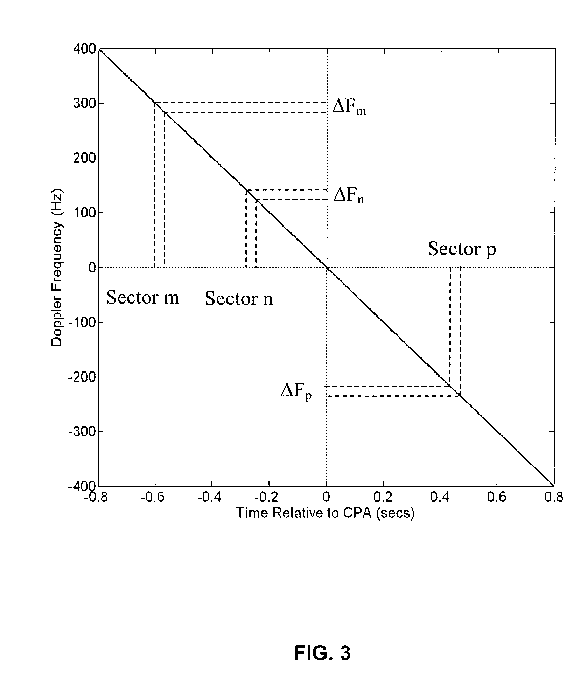

Fig. 3 shows how the Doppler history for a stationary point object is sampled using shorter integration times. In the case shown, this corresponds to sampling the signal from the same object at different times. A similar case applies to detecting different object signals at the same time, although their Doppler time histories are shifted in accordance with the respective object illumination times.

In order to detect these types of signals, an adaptation of the Signal Detection (SD) algorithm disclosed in patent US 6,753,803 has been used. This patent, whose contents are incorporated herein by reference, utilises the combination of a primary representation of a received signal, a primary representation of a transmitted signal, and an auxiliary representation, to determine from the result of combination whether the signal is present. The auxiliary representation comprises multiple concurrent components of different frequencies within a frequency range corresponding to possible Doppler frequency shifts in the object signal, and a received signal considered exhibiting a Doppler frequency shift corresponding to one of the possible Doppler frequency shifts produces a significant response in the combination result.

It has been established that the SD algorithm discussed in US 6,753,803 can also be used to detect a signal whose frequency characteristic varies during the integration time and has an unknown starting phase. The bandwidth of the SD processing is set equal to the expected bandwidth of the object reflected signals, and the centre frequency is systematically varied to detect all frequencies that can be expected due to the platform motion and aspect angles, for every range bin. This is equivalent to searching through the RAR beam (of width BW degrees) with a sector of width BW/RI degrees whereby the centre azimuth angle of the sector varies from the trailing edge of the RAR beam to the leading edge of the RAR beam. At each azimuth angle of the hypothesised object where the magnitude of the expected Doppler shift is appreciable, the transmitted signal is multiplied by a specific set of auxiliary signals that take into account the expected bandwidth of Doppler shifts, the sign of the Doppler frequency shifts and the unknown starting phase. This signal is then combined (correlated) with the return signal for detection and the signal power is estimated.

The signal power estimate SP is given by:

$$SP = SL^2 \qquad (4)$$

$$SL = \max(SLp, SLn) \qquad (5)$$

where:

*SLp* - signal level estimate for positive (*p*) Doppler frequency shifts

$$SLp = \sqrt{CEp^2 + SEp^2} + \sqrt{COp^2 + SOp^2} \qquad (6)$$

*SLn* - signal level estimate for negative (*n*) Doppler frequency shifts

$$SLn = \sqrt{CEn^2 + SEn^2} + \sqrt{COn^2 + SOn^2} \qquad (7)$$

and where the odd components (*COp, SOp, COn, SOn*) and even components (*CEp, SEp, CEn, SEn*) are used to provide a substantially flat frequency response over the frequency band of interest, the bandwidth being determined by the platform velocity and the sector azimuth angles. The sine components (*SEp, SOp, SEn, SOn*) and cosine components (*CEp, COp, CEn, COn*) via the addition of the two square root terms, are used to account for the unknown phase of the Doppler frequency shift.

$$CEp = \frac{1}{N_{PS}} \sum_{j=1}^{N_{PS}} I(j)\, d_{CE}(j) - DQ(j)\, d_{SE}(j) \qquad (8)$$

$$SEp = \frac{1}{N_{PS}} \sum_{j=1}^{N_{PS}} I(j)\, d_{SE}(j) + DQ(j)\, d_{CE}(j) \qquad (9)$$

$$COp = \frac{1}{N_{PS}} \sum_{j=1}^{N_{PS}} I(j)\, d_{CO}(j) - DQ(j)\, d_{SO}(j) \qquad (10)$$

$$SOp = \frac{1}{N_{PS}} \sum_{j=1}^{N_{PS}} I(j)\, d_{SO}(j) + DQ(j)\, d_{CO}(j) \qquad (11)$$

where:

$d_{CE}(j), d_{SE}(j), d_{CO}(j), d_{SO}(j)$ - suitably constructed single-tone or multi-tone signals that have a variable centre frequency

$I(j), Q(j)$ - in-phase and quadrature components of pulse number j of $N_{PS}$ pulses.

For positive Doppler frequency shifts, the quadrature channel data lags the in-phase data channel by 90 degrees for a single frequency signal, $D$ = 1 in equations (8) - (11). For negative Doppler frequency shifts, the in-phase channel data lags the quadrature channel data by 90 degrees for a single frequency signal and D = -1.

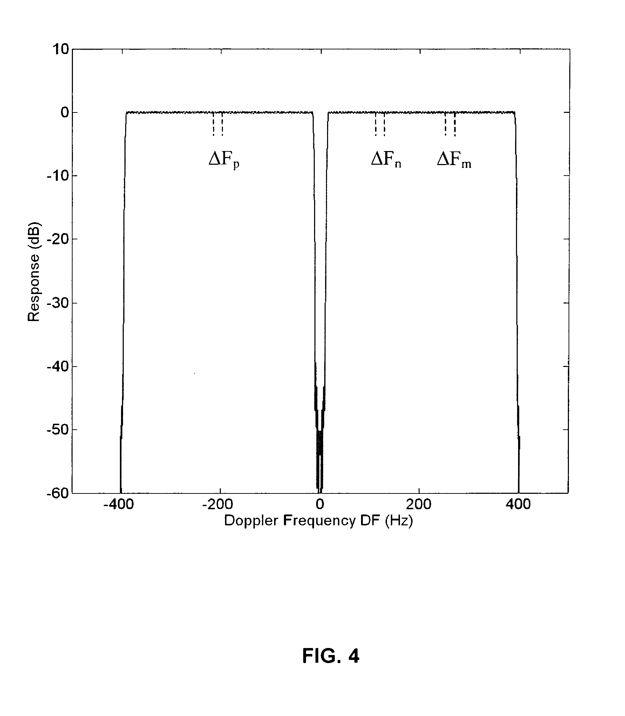

Fig. 4 shows the frequency response of the SD system where it can be seen that the processing has provided a consistent and substantially flat response across all frequencies of interest. The vertical lines show the bandwidth of signals described for Fig. 3.

The platform position and radar parameters of each object detection are then used to map the power estimate onto the ground using a polar to rectangular transformation. The unknown position of the object in the sector is assumed to be uniformly distributed in azimuth across the sector. The polar coordinates of the object detection are calculated from:

$$R = Rb + \frac{RBNc}{2SF} \qquad (12)$$

$$Az = sin^{-1}\left(\frac{FC}{2V\lambda sin(El)}\right) \qquad (13)$$

$$El = \pi / 2 - cos^{-1}\left(\frac{H}{R}\right) \qquad (14)$$

where:

$R, Az, El$ - are estimated Range, Azimuth and Elevation, respectively, from radar to the imaged object (degs)
$H$ - platform height (m)
$Rb$ - Minimum possible range
$RBN$ - Range Bin Number
$SF$ - Sampling Frequency
$FC$ - centre frequency of SD sector containing the detected object (Hz)
The locus of (x, y) positions on the ground for each power estimate is given by:

$$x = X + R\cos(Az + Ai)\cos(El) \qquad (15)$$

$$y = Y + R\sin(Az + Ai)\cos(El) \qquad (16)$$

where:

$X, Y$ - platform down and cross range coordinates (m)
$Ai$ - range of azimuth angles to represent uncertainty of obstacle location in azimuth

$$Ai = (i + 0.5)\Delta A \qquad (degs) \qquad (17)$$

where

$i = -M, -M+1, -M+2, ... M-2, M-1, M$
$M$ - number of azimuth angles used to represent the azimuth uncertainty

$$M = INT\left(\frac{CRU}{2\Delta y}\right) + 1 \qquad (18)$$

$CRU$ - Cross Range Uncertainty of azimuth estimate (m)
$\Delta y$ - CRR cell size of image (m)
$\Delta A$ - azimuth step angle (degs)

$$\Delta A = \frac{1}{2M} tan^{-1}\left(\frac{CRU}{R}\right) \qquad (19)$$

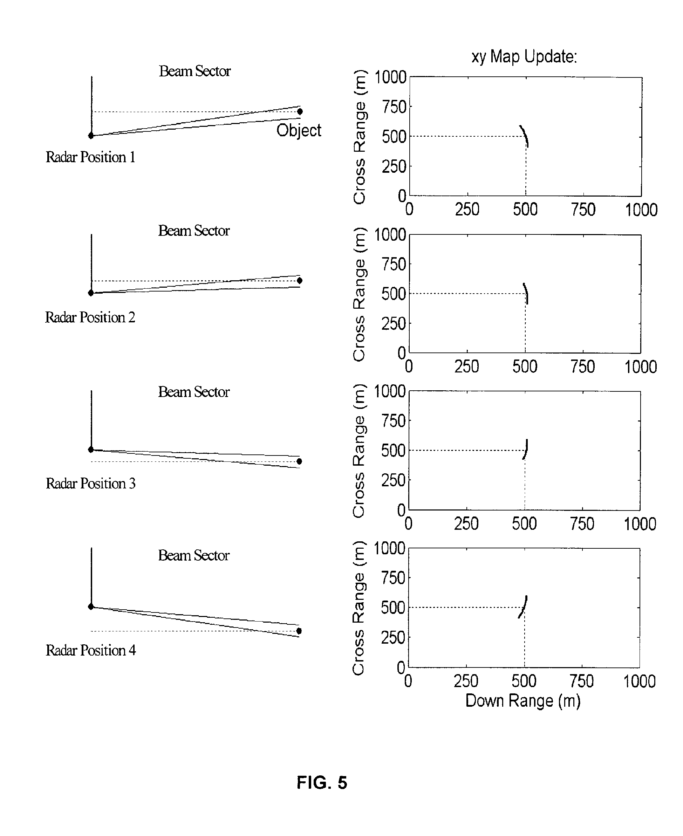

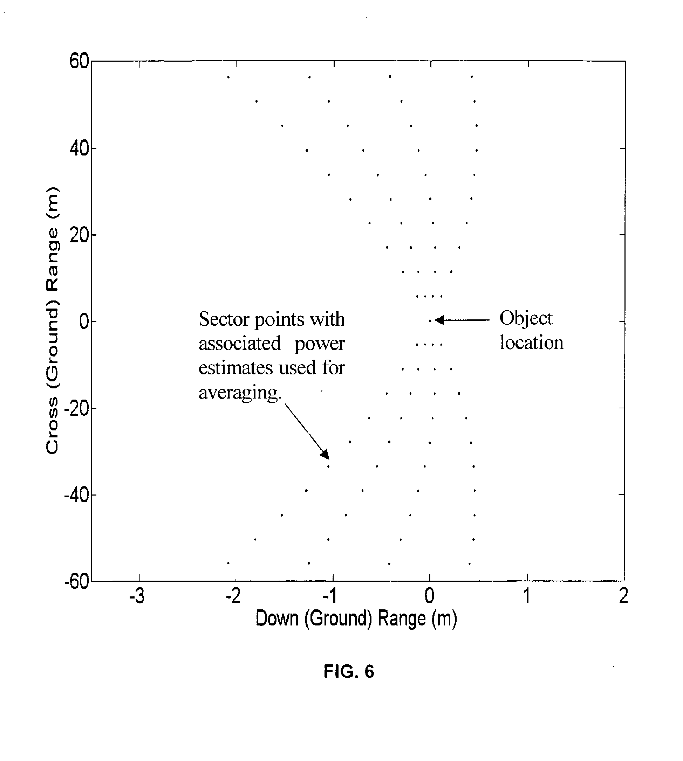

The mapping of a power estimate in a SP sector onto the ground produces an arc (Fig. 5). As the platform flies past an object, the arc will rotate about the position of the object, enabling improved localisation of the object. Fig. 6 shows the sampling of arcs centred on an object where in this case 21 points are used to represent the unknown azimuth position of the object in each sector / arc. In the absence of geometrical errors, the point in each arc corresponding to the actual position of the object occurs in the same grid cell in the ground co-ordinate system, whereas the other points in an arc will not coincide with points in other arcs. In this way, an improved object location can be achieved.

The power estimates are constant within a given sector. Each point in an arc is associated with its respective power estimate and the process of sector averaging of all these power estimates on the ground improves the power / RCS estimation and further improves the CRR. Another benefit of the invention is that it reduces Range Walk, the migration of a point scatterer from range cell to range cell during the signal integration period, compared to that produced by a RAR, by RI.

### First Embodiment

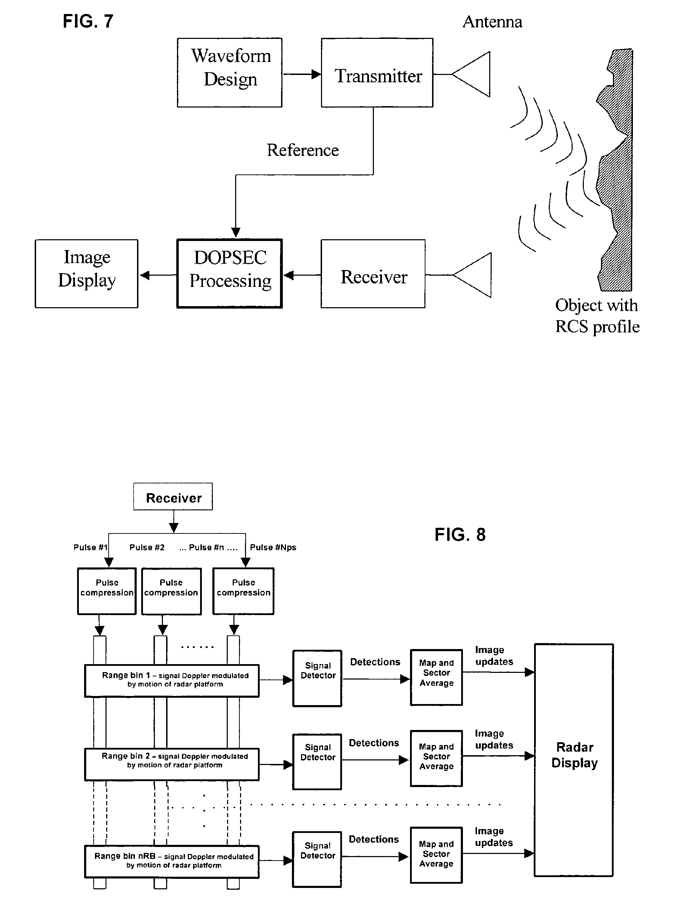

Fig. 7 is a top-level block diagram of a RAR which shows the location of a Doppler Sector Analyser (DOPSEC) incorporating the present invention, with respect to signal reception and radar display.

Fig. 8 is a block diagram of the DOPSEC processing constructed in accordance with the invention. After quadrature demodulation of the received pulses, the pulses are compressed using standard pulse modulation (e.g. Linear Frequency Modulation - LFM) and matched filtering. The processed pulse data is then 'corner turned' whereby the samples of all the compressed pulses are stored in their respective range bins.

Each range bin is then processed by the SD algorithm where each sector processing bandwidth matches the expected bandwidth of the received signals, but whose centre frequency is systematically varied to cater for the unknown position(s) of object(s) in the range bin. For responses that exceed the detection threshold, an object detection is declared and the platform position and radar parameters are then used to map the signal power estimate onto the ground using a polar to rectangular transformation. This process is repeated for all range bins, before the next integration time of sector data is processed.

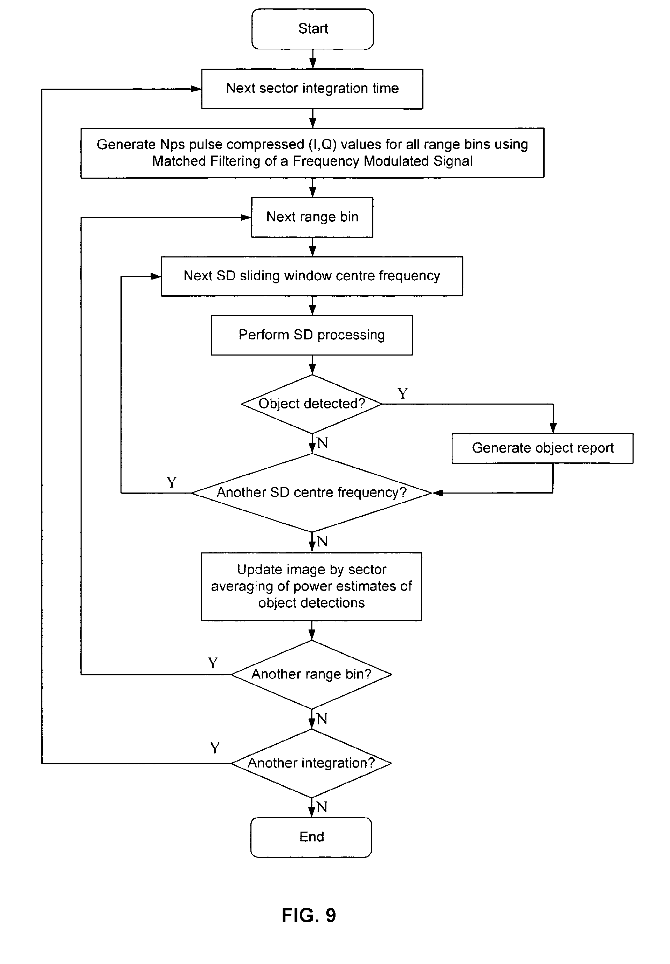

Fig. 9 is a flow diagram of the processing steps performed in the first preferred embodiment of the invention. As shown in Figure 9, $N_{PS}$ pulse compressed (I,Q) values are generated for all range bins using matched filtering of the LFM. The data in the range bins are then sequentially processed by the SD algorithm, with the SD centre frequency sequentially changing. In this way, only a single SD sector processor is required.

### Second Embodiment

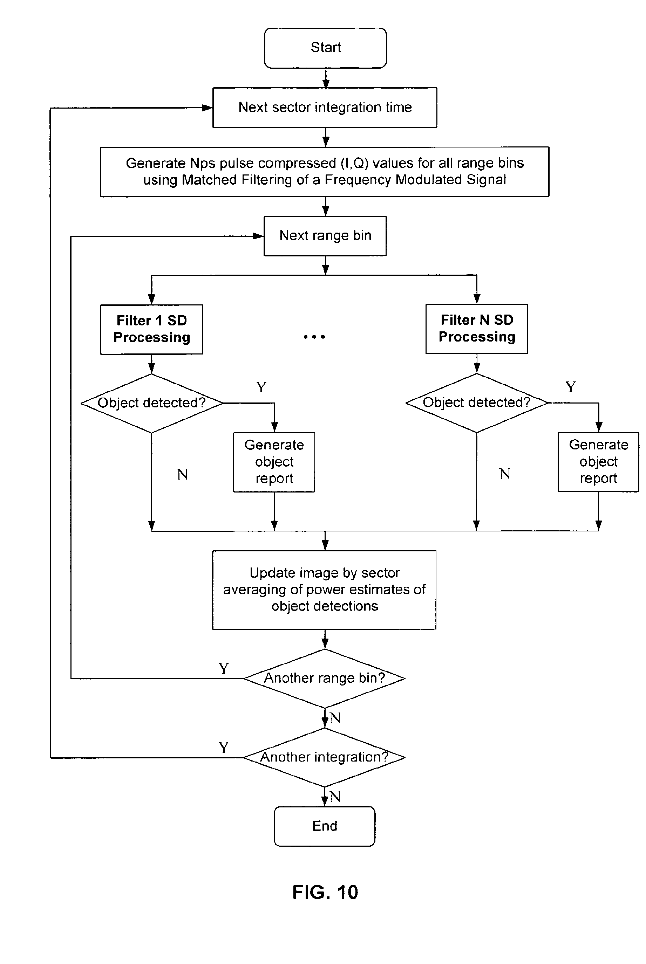

Fig. 10 is a flow diagram of the processing step perfomed in the second embodiment of the invention. The difference between this embodiment and the first embodiment is shown in bold.

In the second embodiment, a bank of SD sector processors are used across each range bin with each SD sector processor being associated with a respective SD centre frequency, instead of a single SD sector processor as previously described for the first embodiment. In this way, the data in a range bin can be processed at different SD centre frequencies in parallel. The output of these processes is then tested for the presence of an object and the reports mapped onto the ground as described in the first preferred embodiment.

Third Embodiment

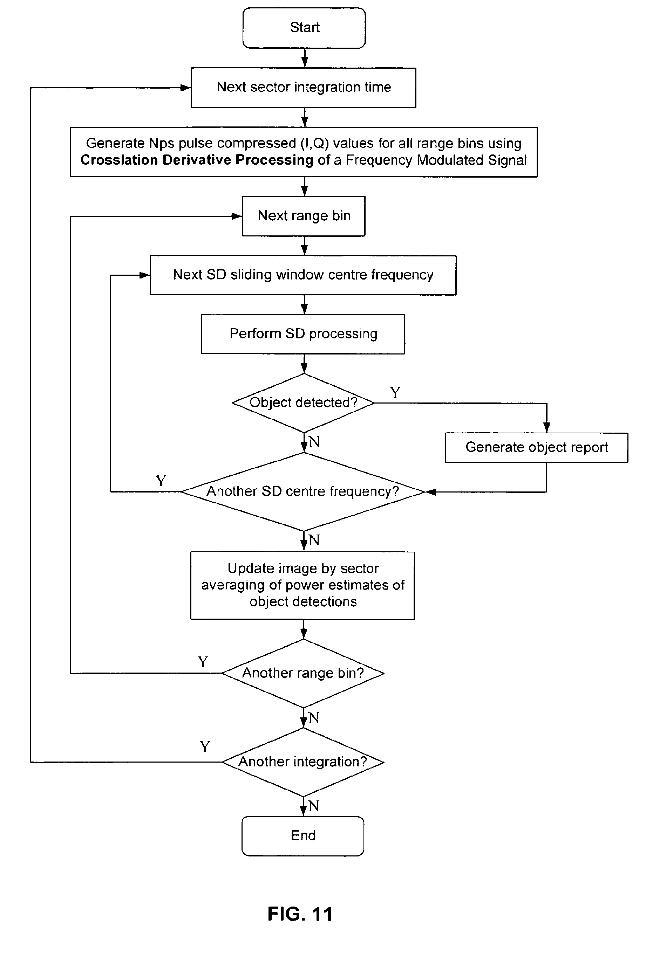

Fig. 11 is a flow diagram of the processing steps performed in the third preferred embodiment of the invention. The difference between this embodiment and the first embodiment is shown in bold. In the third embodiment, the pulse compression is achieved by using Crosslation Derivative processing (the method disclosed in patent application PCT/GB06/003937) of a Period Spread Pseudo Random Binary Sequence (whose design is described in patent application PCT/GB07/003854). Both of these patent publications are incorporated herein by reference.

Comparison with conventional SLAR

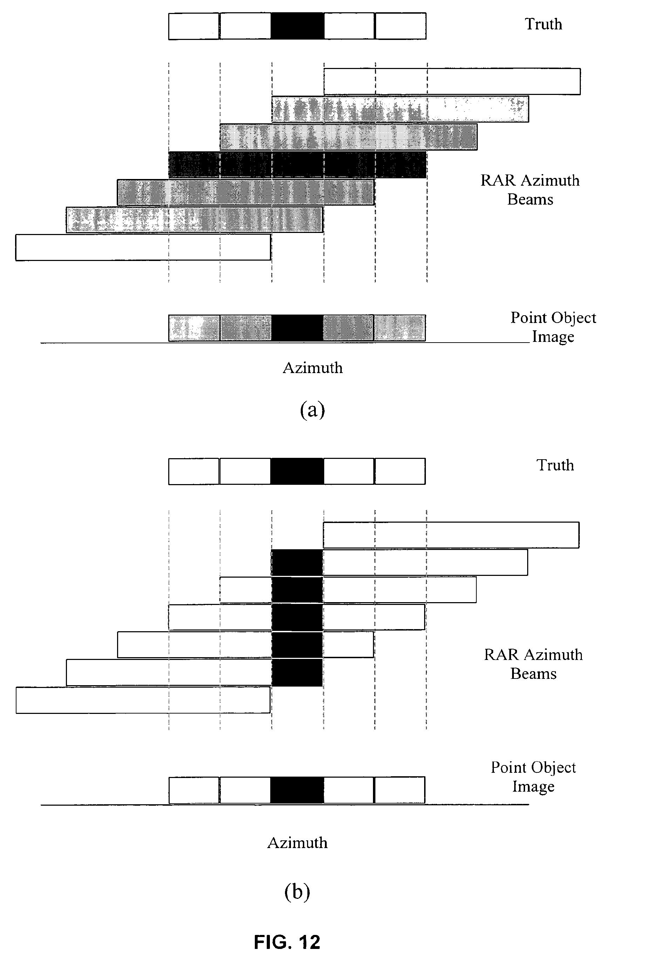

The performance of the present invention in comparison with conventional SLAR processing will now be described with reference to Figures 12 to 14.

Fig.12 illustrates the improvement in CRR of an object using DOPSEC processing compared with using the SLAR technique. With SLAR, (a), and one look, the object can only be localised using the entire beamwidth. The image quality is improved by averaging across looks, although the image is still smeared. With DOPSEC processing, (b), each look better localises the object, and the resultant image is a better match to the truth.

Fig. 13 shows the range response of Crosslation-based processing applied to a spread-period PRBS signal received from a single point object. The response consists of a single peak and sidelobes which are flat and low (<-30dB) (a.) linear scale (b.) logarithmic scale.

Fig. 14 shows (a) the truth data of five objects of varying RCS, (b) the SLAR image of the truth data and (c) the image of the truth data according to the invention. It can be seen that in the SLAR image, the five objects are smeared making it impossible to resolve them. In the image generated by the invention however, all objects are easily resolved.

## MODIFICATIONS AND FURTHER EMBODIMENTS

In the embodiments described above, an SLAR is mounted on a plane which flies along a straight path. While it is preferred that the plane follows a straight path, it will be appreciated that this is not necessary. All that is required is that the plane flies at a known velocity along a known path.

In additon, the invention has application outside applications in which SLAR is mounted on a plane. Although the integration times will be longer, the invention could be applied to deep water sonar where sound propagation obeys the inverse square law. A possible application would be the imaging of the sea bottom.

It will be appreciated that the parallel SD centre frequency window processsing of Embodiment 2 could also be applied when Crosslation-based processing is performed as described in embodiment 3.

**Claims**

1. A method of imaging the location of an object of interest in a displayed co-ordinate system, the method comprising:

   moving a platform at a known velocity along a known path, the platform conveying a radar irradiating a field of view with an interrogation signal and detecting a signal comprising a reflection of the interrogation signal, wherein said field of view moves with the movement of the platform;
   for a plurality of positions of the platform:

   processing said detected signal to determine range information and azimuth information for an object of interest, said azimuth information being determined from a Doppler information from said reflection of the interrogation signal off the object of interest, and
   determining a plurality of candidate location co-ordinates in the displayed co-ordinate system from the range information and the azimuth information; and
   combining the candidate location co-ordinates to generate display data for displaying the location of the object of interest.

2. A method according to claim 1, wherein said interrogation signal comprises a plurality of pulses, and said processing comprises:

storing detected pulses in respective range bins; and

deriving azimuth information for the pulses stored in each range bin based on the detected Doppler information for the pulses.

3.  A method according to claim 1 or 2, wherein said processing comprises deriving azimuth information by combining a primary representation of the interrogation signal, a primary representation of the detection signal and an auxiliary representation, and determining from the result of the combination whether an object of interest is present, wherein the auxiliary representation has a component corresponding to a possible Doppler frequency shift in the detection signal, whereby a portion of the detection signal exhibiting the possible Doppler frequency shift produces an identifiable response in the combination result.

4.  A method according to claim 3, wherein the auxiliary representation comprises a multi-frequency signal having multiple concurrent components corresponding to respective different possible Doppler frequency shifts.

5.  A method according to claim 4, wherein the different frequencies are derived from respective harmonics of a common basic frequency.

6.  A method according to claim 4 or 5, wherein the auxilairy representation has a finite duration, the primary representations being combined throughout that duration to produce said result.

7.  A method according to claim 6, wherein said processing comprises determining a signal strength associated with each plurality of location coordinates, and wherein said combining comprises averaging the signal strengths for coincident candidate location co-ordinates.

8.  A method according to any preceding claim, wherein for each pair of range information and azimuth information, a plurality of different candidate location co-ordinates are calculated having respective different azimuth values, whereby uncertainty in the azimuth information is taken into account.

9.  A method according to any preceding claim, further comprising displaying said display data on a radar display.

10.  A method according to any precedng claim, wherein the platform is an aircraft being flown at a known distance above ground,

wherein the object of interest is on the ground, and

wherein said converting comprising determining candidate location co-ordinates of the object of interest on the ground using a pair of range information and azimuth information and the known position of the aircraft above ground.

11.  A method according to claim 10, wherein the radar is a sideways looking airborne radar.

12.  Apparatus for performing a method as claimed in any preceding claim.

13.  A signal analyser for analysing a signal from a radar mounted on a moving platform, the radar being operable to illuminate a field of view with an interrogation signal and detecting a signal comprising a reflection of the interrogation signal off an object of interest, the signal analyser comprising:

means for processing a plurality of segments of the detection signal, each segment associated with a respective position of the platform, to determine range information and azimuth information for the object of interest, said azimuth information being determined from Doppler information from said reflection of the interrogation signal off the object of interest;

means for determining a plurality of candidate location co-ordinates in a displayed co-ordinate system from the range information and azimuth information; and

means for combining the candidate location co-ordinates to generate display data for displaying the location of the object of interest.

14.  A signal analyser according to claim 13, wherein said determining means comprises:

means for distributing a segment of the detection signal into a plurality of range bins; and

means for processing the data in each range bin to identify azimuth information.

**15.** A signal analyser according to claim 14, wherein said processing means comprises:

means for combining a primary representation of the interrogation signal, a primary representation of the segment of the detection signal and an auxiliary representation, and determining from the result of the combination whether an object of interest is present,

wherein the auxiliary representation has a component at a possible Doppler shift frequency in the detection signal, whereby a portion of the detection signal exhibiting the Doppler shift produces an identifiable response in the combination result.

Radar on
platform

Trajectory of
platform movement

R

Ro

x

Imaged
object

DRR

Imaged area

Resolution
cell

CRR

FIG. 1

FIG. 2

**FIG. 3**

**FIG. 4**

FIG. 5

**FIG. 6**

**FIG. 7**

Waveform Design → Transmitter → Antenna → Object with RCS profile

Reference

Image Display ← DOPSEC Processing ← Receiver

Object with RCS profile

**FIG. 8**

Receiver

Pulse #1  Pulse #2  ... Pulse #n ....  Pulse #Nps

Pulse compression | Pulse compression | Pulse compression

Range bin 1 – signal Doppler modulated by motion of radar platform → Signal Detector → Detections → Map and Sector Average → Image updates → Radar Display

Range bin 2 – signal Doppler modulated by motion of radar platform → Signal Detector → Detections → Map and Sector Average → Image updates → Radar Display

Range bin nRB – signal Doppler modulated by motion of radar platform → Signal Detector → Detections → Map and Sector Average → Image updates → Radar Display

```
                        ┌─────────────┐
                        │    Start    │
                        └──────┬──────┘
                               │
                               ▼
        ┌──────────────────────────────────────────┐
   ┌───▶│        Next sector integration time        │
   │    └──────────────────────┬─────────────────────┘
   │                           │
   │                           ▼
   │  ┌────────────────────────────────────────────────────────┐
   │  │  Generate Nps pulse compressed (I,Q) values for all range│
   │  │  bins using Matched Filtering of a Frequency Modulated    │
   │  │  Signal                                                   │
   │  └────────────────────────┬───────────────────────────────┘
   │                           │
   │                           ▼
   │      ┌──────────────────────────────────┐
   │  ┌──▶│          Next range bin           │
   │  │   └──────────────┬───────────────────┘
   │  │                  │
   │  │                  ▼
   │  │  ┌──────────────────────────────────────────┐
   │  │  ┌▶│  Next SD sliding window centre frequency  │
   │  │  │ └──────────────────┬───────────────────────┘
   │  │  │                    ▼
   │  │  │        ┌────────────────────────┐
   │  │  │        │   Perform SD processing │
   │  │  │        └────────────┬───────────┘
   │  │  │                     ▼
   │  │  │              ◇ Object detected? ◇──Y──┐
   │  │  │                     │                 ▼
   │  │  │                     │N        ┌───────────────────┐
   │  │  │                     │         │Generate object    │
   │  │  │                     │         │report             │
   │  │  │                     ▼         └─────────┬─────────┘
   │  │  └──Y──◇ Another SD centre frequency? ◇◀───┘
   │  │                     │N
   │  │                     ▼
   │  │        ┌──────────────────────────────┐
   │  │        │ Update image by sector        │
   │  │        │ averaging of power estimates  │
   │  │        │ of object detections          │
   │  │        └──────────────┬───────────────┘
   │  │                       ▼
   │  └────────Y────◇ Another range bin? ◇
   │                          │N
   │                          ▼
   └────────Y────────◇ Another integration? ◇
                              │N
                              ▼
                        ┌─────────────┐
                        │     End     │
                        └─────────────┘
```

**FIG. 9**

FIG. 10

Start

↓

Next sector integration time

↓

Generate Nps pulse compressed (I,Q) values for all range bins using **Crosslation Derivative Processing** of a Frequency Modulated Signal

↓

Next range bin

↓

Next SD sliding window centre frequency

↓

Perform SD processing

↓

Object detected? — Y → Generate object report

↓ N

Another SD centre frequency? — Y (loop back to Next SD sliding window centre frequency) / ← (from Generate object report)

↓ N

Update image by sector averaging of power estimates of object detections

↓

Another range bin? — Y (loop back to Next range bin)

↓ N

Another integration? — Y (loop back to Next sector integration time)

↓ N

End

**FIG. 11**

Truth

RAR Azimuth
Beams

Point Object
Image

Azimuth

(a)

Truth

RAR Azimuth
Beams

Point Object
Image

Azimuth

(b)

FIG. 12

(a)

(b)

**FIG. 13**

(a)

(b)

(c)

FIG. 14

Europäisches Patentamt

European Patent Office

Office européen des brevets

# EUROPEAN SEARCH REPORT

**Application Number**

EP 09 25 1686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/032361 A1 (KIRSCHT MARTIN [DE]) 19 February 2004 (2004-02-19) * paragraphs [0035] - [0051]; figure 2 * ----- | 1,2,8-14 | INV. G01S13/89 |
| X | KIRSCHT M: "Detection and imaging of arbitrarily moving targets with single-channel SAR" IEE PROCEEDINGS: RADAR, SONAR & NAVIGATION, INSTITUTION OF ELECTRICAL ENGINEERS, GB, vol. 150, no. 1, 3 February 2003 (2003-02-03), pages 7-11, XP006019658 ISSN: 1350-2395 Section 2 * page 8, left-hand column - page 9, right-hand column * ----- | 1,2,8-14 | |
| A | GB 2 183 117 A (GEN ELECTRIC PLC) 28 May 1987 (1987-05-28) * page 1, line 82 - page 2, line 68; figure 2 * ----- | 1,12,13 | TECHNICAL FIELDS SEARCHED (IPC) G01S |
| A,D | US 6 753 803 B2 (SZAJNOWSKI WIESLAW JERZY [GB]) 22 June 2004 (2004-06-22) * the whole document * ----- | 1-15 | |

The present search report has been drawn up for all claims

| Place of search | Date of completion of the search | Examiner |
|---|---|---|
| Munich | 25 November 2009 | Fanjul Caudevilla, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 25 1686

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2009

| Patent document cited in search report | | Publication date | Patent family member(s) | | Publication date |
|---|---|---|---|---|---|
| US 2004032361 | A1 | 19-02-2004 | AT 315238 T<br>DE 10226508 A1<br>EP 1372000 A2<br>ES 2252574 T3 | | 15-02-2006<br>08-01-2004<br>17-12-2003<br>16-05-2006 |
| GB 2183117 | A | 28-05-1987 | DE 3545029 A1<br>FR 2583173 A1<br>IT 1199919 B | | 18-12-1986<br>12-12-1986<br>05-01-1989 |
| US 6753803 | B2 | 22-06-2004 | DE 60114561 D1<br>DE 60114561 T2<br>EP 1248119 A1<br>EP 1610150 A2<br>JP 4249428 B2<br>JP 2003004842 A<br>JP 2008292502 A<br>US 2002186161 A1 | | 08-12-2005<br>10-08-2006<br>09-10-2002<br>28-12-2005<br>02-04-2009<br>08-01-2003<br>04-12-2008<br>12-12-2002 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4978960 A
- US 6753803 B
- GB 06003937 W
- GB 07003854 W